# EUROPEAN PATENT APPLICATION

(11) **EP 4 806 860 A1**
(43) Date of publication of application: **16.09.2026**
(21) Application number: 25162500.0
(22) Date of filing: 10.03.2025
(51) Int. Cl.: C04B 7/04, C04B 28/04, C04B 28/14, C04B 28/16

(54) **CEMENT CLINKER AND METHOD TO PRODUCE SAID CLINKER**

(71) Applicant: Holcim Technology Ltd., 6300 Zug (CH)
(72) Inventor: FAURE, Jean-Michel, 38070 Saint-Quentin-Fallavier (FR); FEREY, Frédérique, 38070 Saint Quentin Fallavier (FR); ADLER, Michael, 5113 Holderbank (CH)
(74) Representative: SONN Patentanwälte GmbH & Co KG

(57) **Abstract**

A method of producing cement clinker from a source of calcium sulfate, comprising
- a first step of desulfurizing the calcium sulfate to obtain a calcium oxide containing material and sulfur dioxide, and
- a second step of calcining the calcium oxide containing materials to obtain cement clinker,
wherein the first and/or the second step is carried out in the presence of silica, alumina, and iron oxide containing materials,
wherein the source of calcium sulfate contains 0.1-5 wt.-% fluoride salt(s) and 0.1-5 wt.-% phosphate salt(s) and
wherein the first and/or the second step comprises forming fluorellestadite.

## Description

The invention relates to a cement clinker and to a method to produce said clinker from a source of calcium sulfate.

The production of Portland clinker is traditionally done by preparing a raw meal that comprises limestone and raw clay, and calcining this raw material in a rotary kiln at a temperature of around 1'450°C. During this calcination step, the calcium carbonate in the limestone decarbonates to form carbon dioxide and calcium oxide. Furthermore, the rotary kiln used to produce Portland clinker is heated by a burner, which produces heat from burning carbon-containing materials, such as fuels and waste materials, which also produces carbon dioxide. These two processes run simultaneously in a Portland clinker manufacturing plant and produce high amounts of carbon dioxide.

An alternative method of production of Portland clinker that does not require the use of calcium carbonate materials is based on the Müller Kühne (MK) process, wherein a source of calcium sulfates is used as a starting material. In the MK-process calcium sulfate, for example in the form of gypsum, is reduced to calcium sulfide which reacts with calcium sulfate to give sulfur dioxide and calcium oxide, the latter being the main material to obtain cement. The MK-process takes place at temperatures of around 800°C and above, and requires a reducing agent, which is typically a source of carbon, such as coke. The calcium oxide resulting from the MK-process is further processed to obtain Portland clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1'200°C in the presence of silica, alumina and iron oxide to obtain Portland clinker. The SO₂ containing flue gas is then treated to be converted to SO₃ to produce sulfuric acid.

DE 19625538 B4 discloses a method of producing Portland cement and sulfuric acid by the MK-process, wherein waste gypsum board and other gypsum rubble are used as a source of calcium sulfate. The waste gypsum boards are pre-reduced to a uniform mill-processable edge length, sorted and freed from foreign materials such as wood, steel and plastic pieces, ground to powder fineness under throttled air suction, mixed with other cement starting material powder components and, after optional intermediate storage, processed in the rotary kiln to form Portland clinker.

In the known methods of producing cement based on the MK-process, the impurities that come together with the source of calcium sulfate often decrease the quality and the reactivity of the Portland clinker. In particular, many sources of calcium sulfate contain impurities that are known for their retarding effect in cement compositions, such as fluoride salts or phosphate salts.

Therefore, it has been proposed to purify calcium sulfate before using if for producing cement clinker. For example, EP 041 761 A1 discloses a process for purifying phosphogypsum to obtain high-purity calcium sulfate anhydrite. The process involves recrystallizing crude calcium sulfate dihydrate (phosphogypsum) using 20-65% by weight sulfuric acid at 20-90°C for 5 minutes to 3 hours. This recrystallization process significantly reduces impurities such as phosphate, fluoride, and heavy metals in the resulting calcium sulfate anhydrite. The purified anhydrite can then be decomposed to produce technically pure sulfur dioxide and calcium compounds, such as calcium oxide or cement clinker, without the impurities that are present in untreated phosphogypsum.

US 2022/0204403 A1 discloses a production method for making cement and co-producing sulfuric acid from phosphogypsum, comprising purifying the phosphogypsum. The purification process begins by pulping the phosphogypsum, which contains high levels of free water, water-soluble phosphorus, and insoluble phosphorus, with water. The pulped mixture is then fed into a gravity classifier to separate out the coarse particles and insoluble phosphorus. After separation, the pulp undergoes filtering, pressure dehydration, and blow drying to significantly reduce the free water and water-soluble phosphorus content. Finally, the dehydrated phosphogypsum filter cake is granulated along with reducing pulverized coal and clay.

WO 2021/140073 A1 discloses an integrated process for producing cement clinker and sulfuric acid using calcium sulfate (phosphogypsum) generated as a byproduct in phosphoric acid production. The method comprises treating the phosphogypsum separated from the phosphoric acid with an acid to obtain a suspension with purified calcium sulfate. The purified calcium sulfate is then separated as a solid from the liquid phase of the suspension.

Therefore, known processes for the selective elimination of fluoride salts and/or phosphate salts typically are based on selective precipitation. This comprises preparing a solution or a slurry, and then adding reagents that will crystallize as solid salts of fluoride and/or phosphates. These processes are industrially complex to operate and involve high initial investment and operating costs. They also have the disadvantage of being done in water, which then needs to be entirely removed so that the pretreated calcium sulfate can effectively be used as a raw material for a MK-process. This makes such pre-treatment energy intensive, which in turn increases the carbon footprint of the Portland clinker obtained.

The present invention aims at providing a method of producing Portland clinker composition made from a source of calcium sulfate that contains fluoride salts, in order to make a broader range of calcium sulfate sources available for the production of Portland clinker according to the MK-process. In particular, the invention aims at minimizing the pre-treatment required for using sources of calcium sulfate that contain fluoride salts.

In order to solve this and other objects, a first aspect of the invention provides a method of producing cement clinker from a source of calcium sulfate, comprising
- a first step of desulfurizing the calcium sulfate to obtain a calcium oxide containing material and sulfur dioxide, and
- a second step of calcining the calcium oxide containing material to obtain cement clinker,

wherein the first and/or the second step is carried out in the presence of silica, alumina, and iron oxide containing materials,
wherein the source of calcium sulfate contains 0.1-5 wt.-% fluoride salt(s) and 0.1-5 wt.-% phosphate salt(s) and
wherein the first and/or the second step comprises forming fluorellestadite.

Thus, the present invention provides a new approach to impurity management, particularly in the handling of fluoride content within calcium sulfate raw materials, by the formation of fluorellestadite during the processing steps for the transformation of calcium phosphate into cement clinker. The technical effect of fluorellestadite formation lies in its crystallographic incorporation of fluoride ions into a stable mineral phase with the chemical composition Ca₁₀(SiO₄)₃(SO₄)₃F₂. Fluorellestadite is a known apatite-structured phase which forms in cement kilns when sulfates together with fluoride salts are present. This phase is stable until a temperature of around 1'240°C where is melts incongruently to form C2S, a standard phase in Portland clinker, as described in Lea's Chemistry of Cement and Concrete in section 5.4. Surprisingly, it was found that when fluorellestadite is formed in the presence of phosphate salts in the right amounts, it remains stable as one of the phases in the cement clinker, even though, during the production of Portland clinker, the temperature reaches around 1'450°C.

This effectively prevents fluoride interference with cement hydration reactions, thereby overcoming the problem of reduced reactivity and delayed setting time. The formation occurs specifically during the desulfurization phase at approximately 600-1'350°C and/or the subsequent calcination stage at approximately 1'350-1'450°C, provided that the contents of fluoride salt and phosphate salt are within specific ranges.

According to the invention, fluorellestadite was shown to be formed when processing calcium sulfate sources containing fluoride and phosphate salt concentrations ranging from 0.1 to 5 weight percent, and especially when fluoride and phosphate salt concentrations ranging from 0.5 to 5 weight percent. This allows a significant expansion of viable raw material sources, as these concentration levels typically necessitate complex purification procedures in conventional processing methods. The direct utilization of such materials without preliminary purification steps constitutes a substantial process simplification. The weight percentages of the fluoride salt(s) and of the phosphate salt(s) are based on the weight of the dry source of calcium sulfate, measured by drying at a temperature of 40-45°C until the weight of the source of calcium sulfate becomes constant.

Preferably, certain types of phosphogypsum can be used as the source of calcium sulfate containing 0.1-5 **wt.-%** fluoride salt(s). Phosphate salts may need to be added or removed by any known process so as to be in the range of 0.1-5 **wt.-%** phosphate salt(s). Phosphogypsum is a byproduct of the phosphoric acid production process and represents a significant source of calcium sulfate for cement manufacturing. Other possible ranges for the content of fluoride salt(s) in the source of calcium sulfate include 0.5-5 wt.-%, 0.7-5 wt.-%, 0.9-5 wt.-%, 1.1-5 wt.-% and 1.3-5 wt.-%. Other possible ranges for the content of phosphate salt(s) in the source of calcium sulfate include 0.7-5 wt.-%, 0.9-5 wt.-%m 1.1-5 wt.-% and 1.3-5 wt.-%.

In a preferred embodiment of the present invention, the weight ratio of the fluoride salt(s) to the phosphate salt(s) in the calcium sulfate source is within the range of 0.4 to 2.0, preferably 0.4 to 1.5, with a particularly advantageous range being 0.4 to 0.7. The specified weight ratio of fluoride salts to phosphate salts of 0.2-2.0, particularly 0.4-1.5, and even more particularly 0.4-0.7, facilitates optimal formation conditions for fluorellestadite during the thermal processing steps. This compositional range promotes efficient incorporation of both fluoride and phosphate ions into stable crystalline phases.

In a preferred embodiment of the present invention, the phosphogypsum employed as a raw material for the production of cement clinker is subject to radioactivity control measures. Specifically, the maximum allowable radioactivity levels for the key radionuclides of concern, namely uranium-238 (238U), radium-226 (226Ra), and thorium-232 (232Th), are set at 1 Bq/g, 0.5 Bq/g, and 0.5 Bq/g, respectively.

The invention minimizes additional capital expenditure since it maintains compatibility with existing Müller Kühne process infrastructure, requiring no fundamental modifications to standard equipment configurations. The formation of fluorellestadite occurs concurrently with desulfurization and/or clinker formation reactions, representing impurity management through chemical integration rather than physical separation.

It was indeed found that producing a Portland clinker that contains fluorellestadite can reduce the negative effect that comes when the source of calcium sulfate contains fluoride salts. In particular, mineral phases of fluorellestadite were found to constitute inert phases during cement hydration and hardening when compared to the other mineral phases of Portland clinker such as alite, belite or calcium aluminate phases. Thus, all fluoride and/or phosphate salts appear to be effectively stabilised and trapped in fluorellestadite and other phases, meaning they are then not released when the clinker is mixed with water to form concrete or mortar compositions. As a result, these salts are not able to degrade the reactivity of the Portland clinker.

The calcium oxide containing material obtained in the first step is a mineral material that has a calcium oxide content of at least 50% by weight, the remaining parts of the material being other by products coming from the chemical conversion occurring in the first step.

According to a preferred embodiment of the invention, the first step of desulfurizing the calcium sulfate comprises
a) reducing a first portion of the calcium sulfate in the presence of a reducing agent in a reduction reactor to obtain calcium sulfide, and
b) reacting the calcium sulfide and a second portion of the calcium sulfate with each other to obtain a calcium oxide containing material and sulfur dioxide.

Therefore, only a first partial amount (for example 20-35 wt.-%, preferably 29-35 wt.-%) of the calcium sulfate is converted to calcium sulfide in step a). The second amount of calcium sulfate contained in the raw material is used in step b) to convert the calcium sulfide obtained in step a) to a calcium oxide containing material and sulfur dioxide.

The reducing agent used in step a) may preferably be a source of carbon in solid form, such as coal in powder form (e.g. mineral coal, coke, charcoal or even plant coal). In case a source of carbon is used as the reducing agent, the flue gas exiting the first reactor comprises a high concentration of carbon dioxide and sulfur dioxide. Other reducing agents can be metal powders, such as calcium, aluminum, silicium, iron, or mixtures thereof.

Another option is using hydrogen as a reducing agent, so that the generation of carbon dioxide is reduced or eliminated, depending on whether the reducing agent consists of only hydrogen or whether the reducing agent is a mixture of hydrogen with another element. For example, the reducing agent consists of hydrogen only. Preferably, the reducing agent comprises 1-99 vol.-%, preferably 20-95 vol.-%, hydrogen. Using hydrogen as the reducing agent reduces or eliminates the generation of carbon dioxide in the first step of the method of the invention. Hydrogen is a highly effective reducing agent, capable of reducing calcium sulfate to calcium sulfide at relatively low temperatures. This reduces the overall energy requirements for the reducing step, making the process more energy-efficient. In addition, hydrogen is a clean reducing agent, producing only water vapor as a byproduct.

The reduction reaction for converting calcium sulfate to calcium sulfide is as follows:

CaSO₄ + 4 H₂ --> CaS + 4 H₂O

For the hydrogen to be used as a reducing agent, it must be added in a zone of the reduction reactor with only a small amount of oxygen, or at least where the amount of hydrogen added is higher than the stoichiometric ratio of hydrogen and oxygen that takes place during the combustion of hydrogen (H₂ + ½ O₂ --> H₂O). Otherwise, hydrogen would not be available for reducing calcium sulfate.

Alternatively, ammonia may be used as a reducing agent. Using ammonia as the reducing agent reduces or eliminates the generation of carbon dioxide in the desulfurization step of the invention. Ammonia is a highly effective reducing agent, capable of reducing calcium sulfate to calcium sulfide at relatively low temperatures. This reduces the overall energy requirements for the reducing step, making the process more energy-efficient. In addition, ammonia is a clean reducing agent, producing only water vapor and nitrogen or nitrogen oxides as a byproduct. Nitrogen oxides (NOx) can easily be removed from the off-gas by known methods.

The reduction reaction for converting calcium sulfate to calcium sulfide is as follows:

3 CaSO₄ + 8 NH₃ --> 3 CaS + 12 H₂O + 4 N₂

For the ammonia to be used as a reducing agent, it must be added in a zone of the reduction reactor having a reducing atmosphere, with only a small amount of oxygen, or at least where the amount of ammonia added is higher than the stoichiometric ratio of ammonia and oxygen that takes place during the combustion of ammonia.

In step b) of the desulfurization process, the calcium sulfide obtained in step a) is converted to a calcium oxide containing material and sulfur dioxide according to the following reaction:

CaS + 3 CaSO₄ --> 4 CaO + 4 SO₂

Preferably, a mass fraction of the calcium sulfate of 20-35 wt.-%, more preferably 29-25 wt.-%, reacts to calcium sulfide in step a) and the second amount, which may be the remaining fraction, is used in step b).

The second amount of the calcium sulfate preferably corresponds to the fraction of calcium sulfate that remains unreacted in step a). Steps a) and b) can be carried out in the same rector or two different reactors. For example, step a) may be carried out in a first reactor and step b) may be carried out in a second reactor. The second amount of the calcium sulfate preferably corresponds to the fraction of calcium sulfate that remains unreacted when it is withdrawn from the first reactor. Alternatively, only the first amount of the calcium sulfate is subjected to step a) and the second amount is introduced into the second reactor without passing through the first reactor.

The second step of the method according to the invention comprises calcining the calcium oxide in the presence of silica, alumina, and iron oxide containing materials to obtain cement clinker. Silica, alumina and iron oxide are required to be present in the second step, which may be carried out in a clinkerization reactor, because they react with calcium oxide and form clinker minerals, in particular alite (Ca₃SiO₅), belite (Ca₂SiO₄), tricalcium aluminate (Ca₃Al₂O₆), and tetracalcium aluminoferrite (Ca₄Al₂Fe₂O₁₀). These corrective materials can be added to the raw material that is fed to the first step of the invention and/or added to the material stream that is transferred from the first step to the second step.

In a preferred embodiment, the silica, alumina, and iron oxide containing materials comprise recycled or waste materials. In a preferred embodiment, the silica, alumina, and iron oxide containing materials comprise at least 20 wt.-% of recycled or waste materials. The recycled or waste materials can be selected from any of the following materials: mineral waste materials from construction and demolition such as concrete demolition waste, recycled aggregates, recycled bricks, coal ashes, fly ash, or steel slags. The use of waste and recycled materials decreases the environmental impact of this production process, by minimizing the need to use virgin materials.

Preferably, step a) of production of calcium sulfide the desulfurization process is carried out at a temperature of 600-1'100°C, preferably 700-1'000°C for a duration of 20-60 minutes, preferably 20-40 minutes and at a heating rate of 5-30°C, even more preferably 10-20°C/min.

Preferably, step b) of the desulfurization process is carried out at a temperature of 900-1'450°C, preferably 1'000-1'450°C, even more preferably 1'350-1'450°C, preferably for 20-180 minutes, and at a heating rate of 5-30°C/min, even more preferentially 10-20°C.

According to a second aspect, the invention provides a cement clinker comprising:
- > 45 wt.-% C3S
- 20-40 wt.-% C2S
- 2-20 wt.-% fluorellestadite
- < 1 wt.-% ye'elemite, preferably no ye'elemtie
- < 1 wt.-% mayenite, preferably no mayenite.

C3S, or tricalcium silicate (Ca₃SiO₅), is the most reactive phase in Portland cement clinker. During the hydration process, when cement is mixed with water, C3S rapidly reacts to form calcium silicate hydrate (C-S-H) gel and calcium hydroxide (Ca(OH)₂). The C3S content, exceeding 45 wt.-%, ensures sufficient early strength development in the resulting cement.

C2S, or dicalcium silicate (Ca₂SiO₄), is another essential phase in Portland cement clinker, albeit with a slower reactivity compared to C3S. Upon hydration, C2S also forms C-S-H gel and calcium hydroxide, but at a more gradual rate. The C2S content, ranging from 20 to 40 wt.-%, contributes to the long-term strength gain and durability of the cement.

The incorporation of fluorellestadite in the clinker, with a content ranging from 2 to 20 wt.-% serves to immobilize the fluoride impurities found in the calcium sulfate raw materials. By integrating these components into the stable fluorellestadite crystal structure, their negative impact on cement reactivity and performance is effectively mitigated.

Further, the clinker composition of the invention maintains ye'elimite and mayenite contents below 1 wt.-%, with a preference for their complete absence. Ye'elimite and mayenite, often found in calcium sulfoaluminate (CSA) cements, are known to contribute to rapid setting and high early strength. However, the instant invention excludes sulfoaluminate cements.

The cement clinker of the present invention is a Portland cement clinker, meaning that it may, in addition to alite (C3S) and belite (C2S), also contain tricalcium aluminate (C3A) and tetracalcium aluminoferrite (C4AF).

In a preferred embodiment of the present invention, the cement clinker comprises 5-20 wt.-% of the combined content of tricalcium aluminate (C3A) and tetracalcium aluminoferrite (C4AF). The presence of C3A and C4AF within the specified range contributes to the development of a well-balanced set of properties in the cement paste. C3A, known for its high reactivity, plays a role in the early stages of hydration. Upon contact with water, C3A rapidly forms calcium aluminate hydrates, such as ettringite and monosulfate. C4AF, a ferrite phase, exhibits moderate reactivity and contributes to the long-term strength and durability of the cement paste.

The cement clinker of the invention exhibits mineralogical characteristics determined by the size distribution and morphology of the primary clinker phases. Microscopic analysis reveals that the alite (C3S) crystals fall within the range of 10-30 micrometers, with a narrow size distribution that indicates controlled crystal growth during the clinkering process. The belite (C2S) phase demonstrates complementary dimensional characteristics, ranging from 5-25 micrometers. This specific size distribution of the major clinker phases is particularly noteworthy given the presence of fluoride and phosphate impurities in the raw material, as these components traditionally interfere with crystal growth mechanisms. The observed crystal dimensions indicate that the formation of fluorellestadite effectively manages these impurities without disrupting the fundamental crystallization processes of the primary clinker phases. The uniformity in crystal size distribution correlates strongly with enhanced mechanical performance in the resulting cement, as the consistent dimensional characteristics of both C3S and C2S phases promote uniform hydration kinetics and strength development.

In a preferred embodiment of the present invention, the cement clinker is ground to a specific surface area fineness ranging from 2,000 to 15,000 cm²/g, as measured by the Blaine air permeability method (ASTM C204). The clinker fineness within the specified range may be achieved through various grinding technologies, such as multi-stage grinding, employing ball mills or vertical roller mills.

The invention further comprises the use of the Portland cement clinker in construction materials, such as cement compositions, concrete compositions, or mortar compositions.

The present invention further encompasses a hydraulic cement composition incorporating the cement clinker of the invention and any supplementary cementitious materials as specified in EN 197-1 and EN 197-5, including recycled concrete materials from demolition processes. The supplementary cementitious materials may be one or more components selected from the group consisting of ground granulated blast furnace slag, fly ash, silica fume, natural or industrial pozzolans, such as calcined clay, limestone, and silica fume.

The invention will now be described with reference to exemplary embodiments.

### Examples

The examples that are presented below show that clinker compositions that contain fluorellestadite have a better reactivity than clinkers that do not contain fluorellestadite.

### Example 1

For the series of tests presented below, different Portland clinkers were prepared from pure gypsum as a source of calcium sulfate mixed with corrective materials so as to obtain the rights amounts of silicates, aluminates, and other constituents required to produce a raw meal for Portland clinker. Fluoride salts and phosphate salts were added in different amounts, as shown in the table below.

| Sample reference | Amount of calcium phosphate added to the source of calcium sulfate prior to producing the Portland clinker, expressed in weight percentage of phosphate (P2O5) of the Portland clinker | Amount of calcium fluoride added to the source of calcium sulfate prior to producing the Portland clinker, expressed in weight percentage of fluor of the Portland clinker |
|---|---|---|
| Clk-0 | 0 wt.-% | 0 wt.-% |
| Clk-1 | 1 wt.-% | 0.5 wt.-% |
| Clk-2 | 2 wt.-% | 1 wt.-% |

The phosphate used was calcium phosphate, and the fluoride salt used was calcium fluoride.

The Portland clinkers were all produced using the same experimental process, based on the MK-process:
- during the first step of desulfurizing the calcium sulfate to obtain a calcium oxide containing material a heating rate 16°C/min at up to 1'050°C was applied and the temperature kept for 30 min
- during the second step of calcining the calcium oxide containing material to obtain cement clinker a heating rate 16°C/min at up to 1'450°C was applied and the temperature kept for 45 min

The clinkers obtained have the following chemical and mineralogical compositions, respectively measured by X-ray fluorescence (XRF) and Rietveld X-ray diffraction (XRD).

| | Clk-0 (wt. -%) | Clk-1 (wt. -%) | Clk-2 (wt. -%) |
|---|---|---|---|
| SiO2 | 23.4 | 20.9 | 22.1 |
| Al2O3 | 4.8 | 4.2 | 4.3 |
| Fe2O3 | 0.5 | 1.8 | 2.0 |
| CaO | 69.4 | 69.7 | 67.3 |
| MgO | 1.2 | 1.1 | 0.0 |
| K2O | 0.4 | 0.4 | 0.3 |
| Na2O | 0.0 | 0.0 | 0.6 |
| SO3 | 0.0 | 0.0 | 0.0 |
| TiO2 | 0.1 | 0.1 | 0.1 |
| Mn2O3 | 0.0 | 0.0 | 0.0 |
| P2O5 | 0.00 | 1.03 | 2.20 |
| Cr2O3 | 0.0 | 0.0 | 0.0 |
| ZrO2 | 0.0 | 0.0 | 0.0 |
| SrO | 0.2 | 0.2 | 0.1 |
| F | 0.00 | 0.55 | 0.98 |
| Total | 100.0 | 100.0 | 100.0 |

| | Clk-0 (wt. -%) | Clk-1 (wt. -%) | Clk-2 (wt. -%) |
|---|---|---|---|
| Anhydrite | 1 | 2 | 1 |
| C3S - Alite | 60 | 53 | 26 |
| C2S -Belite | 28 | 28 | 46 |
| Yeelimite | 1 | Not detected | Not detected |
| C4AF-A | 2 | 9 | 7 |
| C3A | 6 | 1 | 2 |
| Oldhamite | Not detected | 4 | 2 |
| Ellestadite | Not detected | 3 | 15 |

In order to measure the impact of the presence of fluorellestadite, cements were prepared from the three clinkers shown in example 1. These clinkers were all ground to a Blaine fineness of 2'600-3'200 cm²/g and mixed with an additional amount of gypsum of 0-5 wt.-% so as to reach a constant amount of sulfate (expressed as SO₃ as per cement notation standards) of 5 wt.% in the cement, here acting as a setting regulator of the cement composition.

The reactivity of these cements was compared to cements prepared from Clk-0 and to which the same amounts of calcium phosphate and calcium fluoride were added as free salts to the cement compositions.

### Example 2

| Sample reference | Clinker used | Amount of calcium phosphate added to the cement composition, expressed in weight percentage of phosphate (P2O5) of the Portland clinker | Amount of calcium fluoride added to the cement composition, expressed in weight percentage of fluor of the Portland clinker |
|---|---|---|---|
| Cem-0 | Clk-0 | 0 wt.-% | 0 wt.-% |
| Cem-1 | Clk-1 | 0 wt.-% | 0 wt.-% |
| Cem-0-1C | Clk-0 | 1 wt.-% | 0.5 wt.-% |

Cem-0 is a reference Portland cement, which does not include any phosphate salts, nor any fluoride salts.

Cem-1 is a Portland cement containing 1 and 0.5 wt.-% of phosphate and fluor, respectively, that were included in the raw composition prior to desulfurizing and calcining the composition, as per claim 1.

Cem-0-1C is a comparative Portland cement containing 1 and 0.5 wt.-% of phosphate and fluor, respectively, that were added as free salts after a Portland clinker, free from phosphate and fluoride salts, was produced.

The reactivity of these cements was then measured by isothermal calorimetry at 20°C, by preparing a cement paste at a water-to-cement weight ratio of 0.5, and the results are shown in the figures. The heat flow is normalized to the amount of C3S (alite) measured in the corresponding clinker, as the results show that higher amounts of fluorellestadite appears to correlate with lower amounts of C3S.

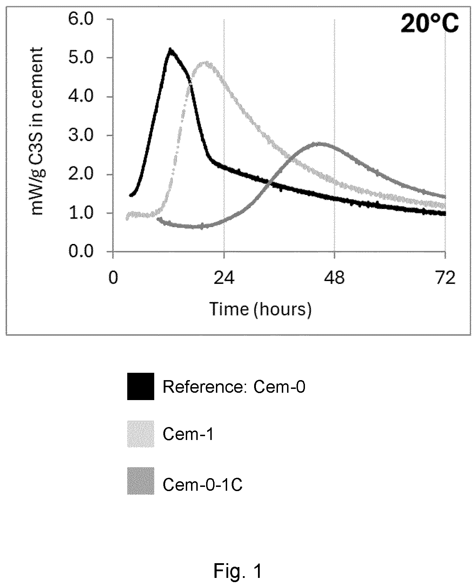

The result illustrated in Fig. 1 shows that even though the cements Cem-1 and Cem-0-1C were produced by including the same total amounts of phosphate and fluoride salts, the retardation effect is much higher in Cem-0-1C.

Clk-1 and Cem-1, which are according to the present invention, show that the presence of fluorellestadite have a positive effect.

### Example 3

| Sample reference | Clinker used | Amount of calcium phosphate added to the cement composition, expressed in weight percentage of phosphate (P2O5) of the Portland clinker | Amount of calcium fluoride added to the cement composition, expressed in weight percentage of fluor of the Portland clinker |
|---|---|---|---|
| Cem-0 | Clk-0 | 0 wt.-% | 0 wt.-% |
| Cem-2 | Clk-2 | 0 wt.-% | 0 wt.-% |
| Cem-0-2C | Clk-0 | 2 wt.-% | 1 wt.-% |

Cem-0 is a reference Portland cement, which does not include any phosphate salts, nor any fluoride salts.

Cem-2 is a Portland cement containing 1 and 1 wt.-% of phosphate and fluor, respectively, that were included in the raw composition prior to desulfurizing and calcining the composition, as per claim 1.

Cem-0-2C is a comparative Portland cement containing 2 and 1 wt.-% of phosphate and fluor, respectively, that were added as free salts after a Portland clinker, free from phosphate and fluoride salts, was produced.

The reactivity of these cements was then measured by isothermal calorimetry at 20°C, by preparing a cement paste have a water-to-cement weight ratio of 0.5, and the results are shown in the figures. The heat flow is here normalized to the amount of C3S (alite) measured in the corresponding clinker.

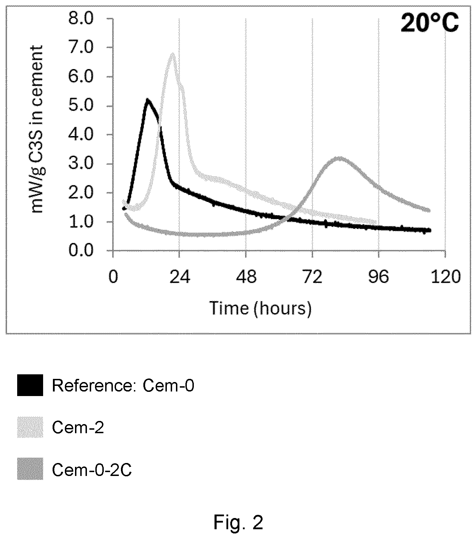

The result illustrated in Fig. 2 shows that even though the cements Cem-2 and Cem-0-2C were produced by including the same amounts of calcium phosphate and calcium fluoride, the retardation effect is much higher in Cem-0-2C.

Clk-2 and Cem-2, which are according to the present invention, show that the presence of fluorellestadite have a positive effect.

### Example 4

Additional clinker and corresponding cements were prepared with fluoride salts, and without phosphate salts, as per the methods described in the examples above. The initial laboratory examples found that the clinker obtained contains less than 1 or 1.5 wt.-% of fluorellestadite. The clinker and corresponding cements obtained also did surprisingly not perform as expected, with retardation attributable to the presence of fluoride salts without the presence of fluorellestadite. Ongoing research work is however required to fully understand this observation.

## Claims

1. A method of producing cement clinker from a source of calcium sulfate, comprising
- a first step of desulfurizing the calcium sulfate to obtain a calcium oxide containing material and sulfur dioxide, and
- a second step of calcining the calcium oxide containing material to obtain cement clinker,
wherein the first and/or the second step is carried out in the presence of silica, alumina, and iron oxide containing materials,
wherein the source of calcium sulfate contains 0.1-5 wt.-% fluoride salt(s) and 0.1-5 wt.-% phosphate salt(s) and
wherein the first and/or the second step comprises forming fluorellestadite.

2. Method according to claim 1, wherein the weight ratio of the fluoride salt(s) to the phosphate salt(s) is 0.4 to 2.0, preferably 0.4 to 1.5, even more preferably 0.4 to 0.7.

3. Method according to claim 1 or 2, wherein the first step of desulfurizing the calcium sulfate comprises
a) reducing a first portion of the calcium sulfate in the presence of a reducing agent in a reduction reactor to obtain calcium sulfide, and
b) reacting the calcium sulfide and a second portion of the calcium sulfate with each other to obtain a calcium oxide containing material and sulfur dioxide.

4. Method according to claim 1, 2 or 3, wherein the reducing agent comprises carbon, hydrogen or ammonia.

5. Method according to any one of claims 1 to 4, wherein the first step is carried out at a temperature of 600-1'100°C, preferably for 20-60 minutes, and at a heating rate of 5-30°C/min.

6. Method according to any one of claims 1 to 5, wherein the second step is carried out at a temperature of 900-1'450°C, preferably for 20-180 minutes and at a heating rate of 5-30°C/min.

7. A cement clinker comprising:
- > 45 wt.-% C3S
- 20-40 wt.-% C2S
- 2-20 wt.-% fluorellestadite
- < 1 wt.-% ye'elemite, preferably no ye'elemtie
- < 1 wt.-% mayenite, preferably no mayenite.

8. Cement clinker according to claim 7, wherein the clinker comprises 5-20 wt.-% C3A + C4AF

9. Cement clinker according to claim 7 or 8, wherein the C3S portion consists of crystals having a size in the range of 10-30 micrometers and the C2S portion consists of crystals having a size in the range of 5-25 micrometers.

10. Cement clinker according to claim 7, 8 or 9, wherein the cement clinker is ground to a specific surface area fineness ranging from 2'000 to 15'000 cm²/g, as measured by the Blaine air permeability method.

11. A hydraulic cement comprising cement clinker according to any one of claims 7 to 10 and 0.5-8 wt.-% gypsum, hemihydrate, anhydrite or mixtures thereof, based on the total weight of the cement.

12. A concrete or mortar comprising a hydraulic cement according to claim 11, aggregates and water.
